# EUROPÄISCHE PATENTSCHRIFT

(11) **EP 0 407 907 B1**
(45) Veröffentlichungstag und Bekanntmachung des Hinweises auf die Patenterteilung: **22.06.1994**
(21) Anmeldenummer: 90112916.3
(22) Anmeldetag: 06.07.1990
(51) Int. Cl.: B23D 43/06

(54) **Drehräumwerkzeug**
Rotary shaving die
Outillage rotatif d'arasage

(30) Priorität: 12.07.1989 DE 3922963
(43) Veröffentlichungstag der Anmeldung: 16.01.1991
(73) Patentinhaber: WIDIA HEINLEIN GMBH, 91586 Lichtenau (DE)
(72) Erfinder:
(74) Vertreter: Schieferdecker, Lutz, Dipl.-Ing.

(56) Entgegenhaltungen:
- DE-A- 3 807 542
- US-A- 1 857 516

## Beschreibung

Die Erfindung bezieht sich auf ein Drehräumwerkzeug mit Schneidplatten tragenden Kassetten, wie es im Oberbegriff des Anspruchs 1 beschrieben ist.

Aus der nachveröffentlichten DE-A-38 07 542 ist bereits ein Drehräumwerkzeug mit in Umfangsabständen angeordneten Kassetten bekannt, die mittels eines Verstellkeils radial einstellbar sind. Jede Kassette ist einteilig ausgeführt und mit zwei Schneidplatten versehen, die an den axial entgegengesetzt weisenden Seitenflächen der Kassette angebracht sind. Infolge eines in der radialen Mittelebene zwischen den beiden Schneidplatten verlaufenden Kassettenspalts lassen sich die Schneidplatten durch mehr oder minder starke axiale Spreizung axial einstellen, indem die Kassette mittels eines Verstellkeils mit einer radial ausgerichteten Einstellschraube in Umfangsrichtung verlagert wird, wobei ein Spreizelement mehr oder minder weit in den mit Schrägflächen versehenen Kassettenspalt eindringt.

Bei dieser Ausbildung lassen sich die an derselben Kassette vorgesehenen zwei Schneidplatten nicht unabhängig voneinander verstellen. Außerdem ist es ungünstig, daß die radiale und die axiale Einstellung jeweils über eine Verstellung der einteiligen Kassette erfolgen, wobei der eine Einstellvorgang den anderen beeinflußt, weil die Kassette erst nach der zweifachen Einstellung endgültig in der Betriebsstellung fixiert bzw. festgespannt werden kann.

Aus der DE-A-31 40 905 ist bereits ein dem Oberbegriff des Anspruchs 1 entsprechendes Werkzeug bekannt, bei dem jeder Schneidplatte eine eigene Kassette zugeordnet ist, die auch bereits zweiteilig ausgeführt ist. Dieses als Planmesserkopf oder Schlichtkopf bezeichnete Werkzeug wird zwar nicht als Drehräumwerkzeug bezeichnet oder zur Verwendung beim Drehräumen vorgeschlagen, kann aber unter anderem auch als ein entsprechend einsetzbares Drehräumwerkzeug angesehen werden.

Bei diesem bekannten Werkzeug ist jeweils das mit der Schneidplatte versehene Kassettenteil schmaler und kleiner als das restliche Kassettenteil ausgebildet und in einer Eckausnehmung dieses restlichen Kassettenteils an diesem in einer axialen Werkzeugebene verschwenkbar gelagert und fixierbar. Dabei dient die Verschwenkbarkeit der Verstellung der Nebenschneide der Schneidplatte, nicht jedoch der Radial- und/oder Axialeinstellung der Schneidplatte. Dafür sind ein Verstellkeil und ein gesondertes Verstellelement vorgesehen, die jeweils am restlichen Kassettenteil angreifen, so daß sich auch hier die axiale und die radiale Einstellung gegenseitig beeinflussen.

Dementsprechend liegt der Erfindung die Aufgabe zugrunde, ein Drehräumwerkzeug zu schaffen, das eine bequeme und genaue Schneidplatteneinstellung sowohl in radialer wie in axialer Richtung gewährleistet.

Diese Aufgabe wird mit einer Ausbildung gemäß dem Anspruch 1 gelöst.

Dadurch, daß die Radialverstellung über das Kassettenunterteil und die Axialverstellung über das Kassettenoberteil erfolgt, können die beiden Einstellvorgänge unabhängig voneinander der Reihe nach durchgeführt werden und nach entsprechender Einstellung sogleich das Kassettenunterteil bzw. das Kassettenoberteil in der eingestellten Lage fixiert werden. Somit kann beim erfindungsgemäßen Drehräumwerkzeug jede Schneidplatte unabhängig sowohl in radialer wie in axialer Richtung auf einfache Weise exakt eingestellt werden. Dabei wird dieses Ergebnis mit Kassetten von vergleichsweise geringer Abmessung in Umfangsrichtung erreicht, so daß sich auch der Vorteil ergibt, daß der Grundkörper vergleichsweise dicht mit Schneidplatten bestückt werden kann.

Die Unteransprüche sind auf zweckmäßige Ausgestaltungen und vorteilhafte Weiterbildungen des erfindungsgemäßen Drehräumwerkzeugs gerichtet.

Die Erfindung wird nachstehend anhand eines Ausführungsbeispieles, das in der Zeichnung dargestellt ist, näher beschrieben. Dabei zeigen:
- Fig. 1:: in abgebrochener Darstellung sowie zum Teil im Schnitt eine Seitenansicht eines Grundkörpers bzw. Segmentes mit einer die Schneidplatte tragenden, axial und radial einstellbaren Kassette;
- Fig. 2:: einen Schnitt längs der Linie II/II in Fig. 1;
- Fig. 3:: eine Draufsicht auf die Teile gem. Fig. 1 und
- Fig. 4:: eine Seitenansicht eines Segmentes mit getrennt axial und radial einstellbaren Kassetten bzw. Ausnehmungen für Kassetten.

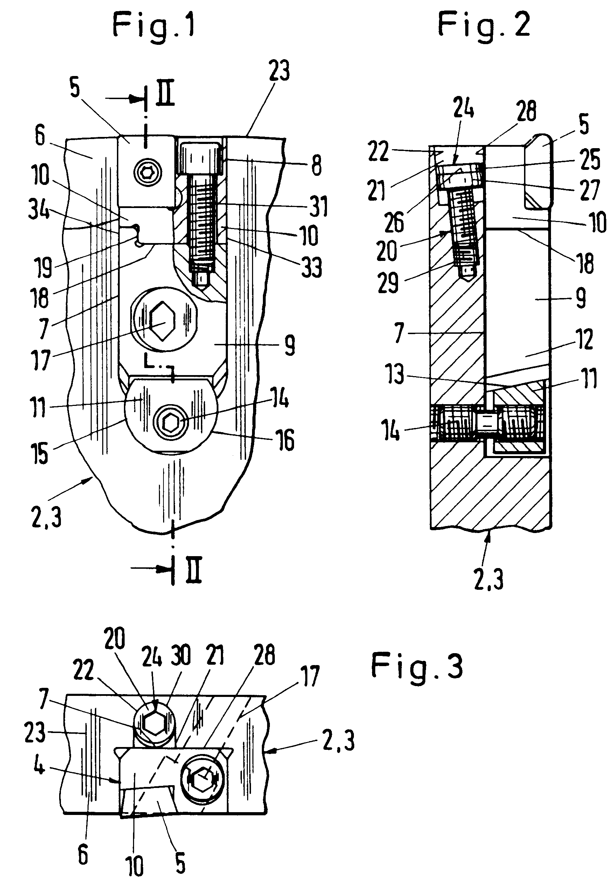

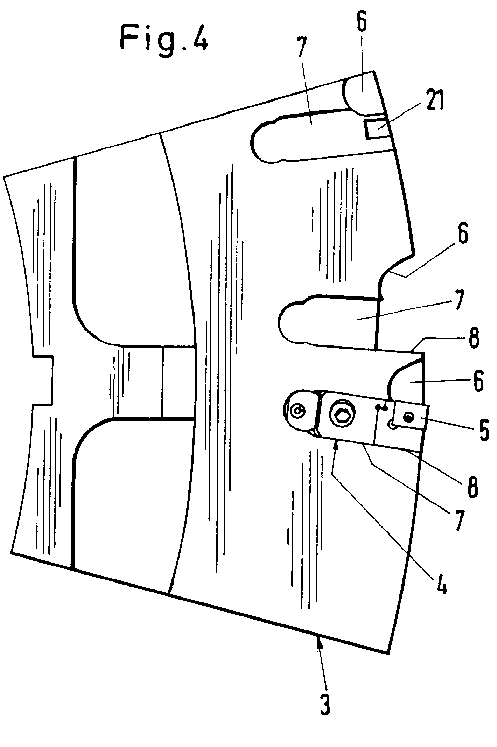

Ein Drehräumwerkzeug 1 umfaßt gemäß dem in den Fig. 1-4 dargestellten Ausführungsbeispiel einen Grundkörper 2 bzw. ein Segment 3 und mindestens eine Kassette 4 mit einer einzigen Schneidplatte 5. In Laufrichtung jeweils vor der Schneidplatte 5 befindet sich eine Spankammer 6.

Zur Aufnahme jeder Kassette 4 ist im Grundkörper 2 bzw. im Segment 3 eine Ausnehmung 7 vorgesehen. Sowohl die Kassette 4 als auch die Ausnehmung 7 für die Kassette 4 erstrecken sich mit ihrer Hauptrichtung und größten Länge radial zur Drehrichtung des Grundkörpers 2 bzw. des Segmentes 3. Über ihre gesamte Länge stützt sich die Kassette 4 unmittelbar an einer im wesentlichen radial gerichteten und in Laufrichtung hinten liegenden Begrenzungswand 8 der die Kassette 4 aufnehmenden Ausnehmung 7 im Grundkörper 2 bzw. Segment 3 ab.

Um optimale Voraussetzungen für eine getrennte Einstellbarkeit der Schneidplatte 5 in axialer und radialer Richtung zu erzielen, ist die Kassette 4 zweiteilig. Sie besteht aus einem Kassettenunterteil 9 und einem Kassettenoberteil 10, welches die Schneidplatte 5 trägt. Dort ist sie in einer Ausnehmung angeschraubt.

Die beiden Kassettenteile 9 und 10 sind in unterschiedlichen Richtungen in der Ausnehmung 7 einstellbar und befestigbar. Dies geschieht gemäß dem dargestellten Ausführungsbeispiel in der Form, daß das Kassettenoberteil 10 axial einstellbar ist, während das Kassettenunterteil in radialer Richtung einstellbar ist.

Die Radialverstellung des Kassettenunterteiles 9 erfolgt mit Hilfe eines Verstellkeiles 11, der am Kassettenunterteil 9 an dessen dem Kassettenoberteil 10 abgewandten Ende 12 angreift. Der Verstellkeil 11 ist im Querschnitt gemäß Fig. 1 kreissegmentförmig und weist eine Schräge 13 auf, die in Verbindung mit einer zum Einstellen dienenden Differentialschraube 14 eine radiale Verstellung des Kassettenunterteiles 9 bewirkt. Mit seinem kreisförmigen Umfang 15 stützt sich der Verstellkeil 11 am radial innen liegenden Ende 16 der die Kassette 4 aufnehmenden Ausnehmung 7 ab.

Eine Klemmschraube 17 dient zur Befestigung des Kassettenunterteiles 9 am Grundkörper 2 bzw. Segment 3.

Das Kassettenunterteil 9 und das Kassettenoberteil 10 liegen ebenflächig aneinander. Ihre Anlagefläche 18 kann zweckmäßigerweise einen Absatz 19 aufweisen und ferner ist es zweckmäßig, daß die Anlagefläche 18 des Kassettenoberteiles 10 am Kassettenunterteil 9 in einer Ebene parallel zur Drehachse und tangential zur Drehbewegung liegt (Fig. 1 und 2).

Zur Axialverstellung des Kassettenoberteiles 10 dient ein Verstellelement 20, das sich einerseits axial am Grundkörper 2 bzw. Segment 3 abstützt und andererseits axial am Kassettenoberteil 10 anliegt.

Für das Verstellelement 20 ist eine Ausnehmung 21 im Grundkörper 2 bzw. Segment 3 vorgesehen, die mindestens eine schräg zur Drehachse gerichtete Abstützfläche 22 für das Verstellelement 20 aufweist. Gemäß dem in den Figuren dargestellten Ausführungsbeispiel erstreckt sich die Ausnehmung 21 vom Umfang 23 des Grundkörpers 2 bzw. Segmentes 3 radial einwärts.

Gemäß dem in den Figuren dargestellten Ausführungsbeispiel ist als Verstellelement 20 eine Zylinderkopfschraube 24 vorgesehen. Das freie Ende 25 ihres Schraubenkopfes 26 ist zylindrisch und liegt an der Abstützfläche 22 der Ausnehmung 21 an. Das gewindeschaftseitige Ende 27 des Schraubenkopfes 26 ist kegelstumpfförmig und liegt auf der Rückseite 28 des Kassettenoberteiles 10 an. Die Gewindebohrung 29 für die Zylinderkopfschraube 24 ist in Verstellrichtung ebenso geneigt wie die Abstützfläche 22. Vorzugsweise handelt es sich bei der Abstützfläche 22 um die Wand einer Bohrung 30, die zu der das Kassettenoberteil 10 aufnehmenden Ausnehmung 7 hin offen ist (Fig. 2 und 3). Durch Verstellen der Zylinderkopfschraube 24 wird das Kassettenoberteil 10 gezwungen, sich auf der mit dem Kassettenunterteil 9 gemeinsamen Anlagefläche 18 axial weiter nach rechts oder nach links in Fig. 2 zu bewegen.

Die Befestigung des Kassettenoberteiles 10 mit der Schneidplatte 5 erfolgt nach der axialen Einstellung mit Hilfe einer Klemmschraube 31 am Kassettenunterteil 9.

Der Absatz 19 im Bereich der Anlagefläche 18 erstreckt sich in radialer Richtung.

Das Kassettenoberteil 10 liegt mit seiner die Schneidkräfte aufnehmenden Abstützfläche 33 an der Begrenzungswand 8 der Ausnehmung 7 an. In Laufrichtung übergreift die zweite, axial gerichtete Begrenzungswand 34 das Kassettenoberteil 10 unterhalb der Schneidplatte noch etwas.

## Patentansprüche

1. Drehräumwerkzeug mit einem kreisförmigen oder kreissegmentförmigen Grundkörper (2, 3), an dessen Umfang mit Umfangsabstand mehrere Schneidplatten (5) angeordnet sind, die jeweils an einer eigenen Kassette (4) vorgesehen sind, die in einer radialen Ausnehmung (7) des Grundkörpers (2, 3) aufgenommen und mittels eines zwischen den radial innenliegenden Enden der Kassette (4) und der Ausnehmung (7) angeordneten Verstellkeils (11) mit einer Verstellschraube (14) radial einstellbar ist, wobei die Schneidplatte (5) an einem Kassettenteil (10) befestigt ist, das gegenüber dem restlichen Kassettenteil (9) verlagerbar ist, und die Schneidplatte (5) mittels eines gesonderten Verstellelements (20) auch axial einstellbar ist, **dadurch gekennzeichnet**, daß das die Schneidplatte (5) tragende Kassettenteil als radial äußeres Kassettenoberteil (10) und das restliche Kassettenteil als radial inneres Kassettenunterteil (9) ausgebildet sind, daß das Kassettenoberteil (10) und das Kassettenunterteil (9) relativ zueinander axial verschiebbar sind und daß das Verstellelement (20) für die Axialeinstellung auf das Kassettenoberteil (10) einwirkt.

2. Drehräumwerkzeug nach Anspruch 1, **dadurch gekennzeichnet**, daß die sich aus den Kassettenteilen (9 und 10) zusammensetzende Kassette (4) und die sie aufnehmende Ausnehmung (7) im Grundkörper (2, 3) mit ihrer Hauptrichtung und größten Länge sich radial zur Drehrichtung des Drehräumwerkzeug erstreckend angeordnet sind.

3. Drehräumwerkzeug nach Anspruch 1 oder 2, **dadurch gekennzeichnet**, daß das Kassettenoberteil (10) bis in die Ausnehmung (7) eingreift.

4. Drehräumwerkzeug nach einem der Ansprüche 1 bis 3, **dadurch gekennzeichnet**, daß sich das Kassettenunterteil (9) und das Kassettenoberteil (10) an einer Begrenzungswand (8) der die Kassette (4) aufnehmenden Ausnehmung (7) des Grundkörpers (2, 3) abstützen.

5. Drehräumwerkzeug nach einem der Ansprüche 1 bis 4, **dadurch gekennzeichnet**, daß sich der zur Radialverstellung dienende Verstellkeil (11) mit einem kreisförmigen Umfang (15) am radial innenliegenden Ende (16) der die Kassette (4) aufnehmenden Ausnehmung (7) abstützt und mit einer Schräge (13) am Kassettenunterteil (9) anliegt.

6. Drehräumwerkzeug nach einem der Ansprüche 1 bis 5, **dadurch gekennzeichnet**, daß das Verstellelement (20) zur Axialverstellung des Kassettenoberteils (10) mit der Schneidplatte (5) eine in Verstellrichtung geneigte Zylinderkopfschraube (24) aufweist, deren freies Kopfende (25) zylindrisch ist und sich an einer zur Ausnehmung (7) hin offenen Bohrung (30) im Grundkörper (2, 3) abstützt, während das gewindeschaftseitige Kopfende (27) der Zylinderkopfschraube (24) kegelförmig ist und an dem axial einstellbaren Kassettenoberteil (10) anliegt.

7. Drehräumwerkzeug nach Anspruch 1, **dadurch gekennzeichnet**, daß das Kassettenoberteil (10) eine am Kassettenunterteil (9) anliegende Anlagefläche (18) aufweist, die in einer Ebene parallel zur Drehachse und tangential zur Drehbewegung liegt.

8. Drehräumwerkzeug nach Anspruch 7, **dadurch gekennzeichnet**, daß die Anlagefläche (18) einen Absatz (19) aufweist.

## Claims

1. A rotary broaching tool comprising a main body (2, 3) which is of a circular shape or which is in the form of a segment of a circle and at the periphery of which are disposed at peripheral spacings a plurality of cutting plates (5) which are each provided on their own holder (4) which is accommodated in a radial recess (7) in the main body (2, 3) and which is radially adjustable by means of an adjusting wedge (11) with an adjusting screw (14), the adjusting wedge being arranged between the radially inward ends of the holder (4) and the recess (7), wherein the cutting plate (5) is fixed to a holder portion (10) which is displaceable relative to the remaining holder portion (9) and the cutting plate (5) is also axially adjustable by means of a separate adjusting element (20), characterised in that the holder portion which carries the cutting plate (5) is in the form of a radially outer holder upper portion (10) and the remaining holder portion is in the form of a radially inner holder lower portion (9), that the holder upper portion (10) and the holder lower portion (9) are axially displaceable relative to each other, and that the adjusting element (20) for axial adjustment acts on the holder upper portion (10).

2. A rotary broaching tool according to claims 1 characterised in that the holder (4) which is composed of the holder portions (9 and 10) and the recess (7) accommodating same in the main body (2, 3) are arranged with their main direction and greatest length extending radially relative to the direction of rotation of the rotary broaching tool.

3. A rotary broaching tool according to clam 1 or clam 2 characterised in that the holder upper portion (10) engages into the recess (7).

4. A rotary broaching tool according to one of claims 1 to 3 characterised in that the holder lower portion (9) and the holder upper portion (10) bear against a boundary wall (8) of the recess (7) in the main body (2, 3), which accommodates the holder (4).

5. A rotary broaching tool according to one of clams 1 to 4 characterised in that the adjusting wedge (11) which serves for radial adjustment bears with a circular periphery (15) against the radially inward end (16) of the recess (7) which accommodates the holder (4), and lies with an inclined surface (13) against the holder lower portion (9).

6. A rotary broaching tool according to one of clams 1 to 5 characterised in that the adjusting element (20) for axial adjustment of the holder upper portion (10) with the cutting plate (5) has a socket-head screw (24) which is inclined in the adjustment direction and the free head end (25) of which is cylindrical and bears against a bore (30) in the main body (2, 3), which is open towards the recess (7), while the head end (27), at the screwthreaded shank side, of the socket-head screw (24) is conical and lies against the axially adjustable holder upper portion (10).

7. A rotary broaching tool according to claim 1 characterised in that the holder upper portion (10) has a contact surface (18) which lies against the holder lower portion (9) and which is disposed in a plane parallel to the axis of rotation and tangentially with respect to the rotary movement.

8. A rotary broaching tool according to clam 7 characterised in that the contact surface (18) has a step (19).

## Revendications

1. Outillage d'arasage rotatif à corps de base (2, 3) en forme de cercle ou de segment de cercle à la périphérie duquel sont disposés à distance périphérique plusieurs plateaux porte-lames (5), chacune prévus sur leur propre cassette (4) qui est logée dans une cavité radiale (7) du corps de base (2,3) et qui est réglable radialement par une vis de réglage (14) au moyen d'une clavette de réglage (11) disposée entre les extrémités radialement internes de la cassette (4) et de la cavité (7), le plateau porte-lames (5) étant fixé à une partie de cassette (10) qui est déplaçable par rapport à la partie restante de cassette (9), le plateau porte-lames (5) étant également réglable axialement au moyen d'un élément de réglage séparé (20), caractérisé en ce que la partie de cassette portant le plateau porte-lames (5) constitue la partie supérieure de cassette (10) radialement externe et la partie de cassette restante constitue la partie inférieure de cassette (9) radialement interne, en ce que la partie supérieure de cassette (10) et la partie inférieure de cassette (9) sont mobiles axialement l'une par rapport à l'autre et en ce que l'élément de réglage (20) pour le réglage axial agit sur la partie supérieure de cassette (10).

2. Outillage d'arasage rotatif selon la revendication 1, caractérisé en ce que la cassette (4), se composant des parties de cassette (9 et 10), et la cavité (7) lui servant de logement sont disposées dans le corps de base (2, 3) en s'étendant avec leur direction principale et leur plus grande longueur radialement par rapport au sens de rotation de l'outillage d'arasage rotatif.

3. Outillage d'arasage rotatif selon la revendication 1 ou 2, caractérisé en ce que la partie supérieure de cassette (10) pénètre dans la cavité (7).

4. Outillage d'arasage rotatif selon l'une des revendications 1 à 3, caractérisé en ce que la partie inférieure de cassette (9) et la partie supérieure de cassette (10) prennent appui contre une paroi de délimitation (8) de la cavité (7) du corps de base (2, 3), cavité servant de logement à la cassette (4).

5. Outillage d'arasage rotatif selon l'une des revendications 1 à 4, caractérisé en ce que la clavette de réglage (11) servant au réglage radial prend appui par sa périphérie circulaire (15) contre l'extrémité (16) radialement interne de la cavité (7) servant de logement à la cassette (4) et s'applique contre la partie inférieure de cassette (9) par une inclinaison (13).

6. Outillage d'arasage rotatif selon l'une des revendications 1 à 5, caractérisé en ce que l'élément de réglage (20) pour le réglage axial de la partie supérieure de cassette (10) présente, avec le plateau porte-lames (5), une vis à tête cylindrique (24) inclinée dans le sens de réglage, dont l'extrémité libre (25) de la tête est cylindrique et prend appui dans le corps de base (2, 3) contre un alésage ouvert (30) en direction de la cavité (7), tandis que l'extrémité (27), côté tige filetée, de la vis à tête cylindrique (24) est de forme conique et s'applique contre la partie supérieure de cassette (10) réglable axialement.

7. Outillage d'arasage rotatif selon la revendication 1, caractérisé en ce que la partie supérieure de cassette (10) présente une surface d'appui (18) appliquée contre la partie inférieure de cassette (9), surface qui se situe dans un plan parallèlement à l'axe de rotation et de manière tangentielle au mouvement de rotation.

8. Outillage d'arasage rotatif selon la revendication 7, caractérisé en ce que la surface d'application (18) présente un décrochement (19).
